# FASCICULE DE BREVET EUROPEEN

(11) **EP 2 996 883 B1**
(45) Date de publication et mention de la délivrance du brevet: **28.06.2017**
(21) Numéro de dépôt: 14729413.6
(22) Date de dépôt: 12.05.2014
(51) Int. Cl.: C09D 11/037, C09D 11/50, B41M 3/14, B41M 5/323, B41M 5/337, C09D 11/03, B42D 25/36, B42D 25/45, B42D 25/351, B42D 25/378, D21H 21/44, D21H 21/48

(54) **PROCÉDÉ ET DISPOSITIF DE PROTECTION SÉCURITAIRE D'UN DOCUMENT OFFICIEL ET DOCUMENT OFFICIEL AINSI PROTÉGÉ**
VERFAHREN UND VORRICHTUNG ZUM SICHEREN SCHUTZ EINES OFFIZIELLEN DOKUMENTS UND SO GESCHÜTZTES OFFIZIELLES DOKUMENT
METHOD AND DEVICE FOR THE SECURE PROTECTION OF AN OFFICIAL DOCUMENT AND OFFICIAL DOCUMENT THUS PROTECTED

(30) Priorité: 13.05.2013 FR 1354254
(43) Date de publication de la demande: 23.03.2016
(73) Titulaire: FASVER, 34670 Baillargues (FR)
(72) Inventeur: PHILIPPE, Eric, F-13430 Eyguieres (FR); BES, Laurence, F-34830 Jacou (FR)
(74) Mandataire: Cabinet BARRE LAFORGUE & associés
(86) Numéro de dépôt international: PCT/FR2014/051098
(87) Numéro de publication internationale: WO 2014/184481

(56) Documents cités:
- EP-A1- 0 271 941
- WO-A1-2013/132186
- DE-A1-102006 016 048
- US-A- 4 028 118
- US-A1- 2012 104 743

## Description

L'invention concerne un procédé et un dispositif de protection sécuritaire d'une portion de surface d'un document officiel portant des inscriptions. Elle s'étend à un document officiel ainsi protégé.

Dans tout le texte, on entend par « lumière visible », toute lumière dont la composition spectrale est située dans le spectre visible, dans les longueurs d'onde comprises entre 0,4 µm et 0,8 µm.

Dans tout le texte, on entend par « image semi-transparente » toute image qui, lorsqu'elle recouvre un document ou un produit permet de distinguer -notamment de lire- par visualisation normale (sans instrument spécifique) à travers cette image, au moins sous éclairage en lumière visible, des caractères ou des motifs sous-jacents du document. En particulier, une image semi-transparente ne masque pas totalement, au moins sous éclairage en lumière visible, les caractères et/ou motifs sous-jacents du document.

Dans tout le texte, on désigne par « inscription » ou « inscription à lire » tout signe ou motif réalisé sur une couche d'un document, pouvant être lu par l'homme au moins sous certaines conditions (notamment sous éclairage normal en lumière visible ; et/ou sous éclairage spécifique ; et/ou après activation d'un dispositif électronique (écran) ou autre...). Il peut s'agir de mentions variables de personnalisation d'un document officiel ou de mentions communes et/ou de sécurité ; de textes (écriture manuelle ou caractères imprimés) ; de codes (ASCII, codes universels à lecture optoélectronique tels que codes à barres...) ; d'images ou photographies...

On connait de nombreux dispositifs et procédés de protection sécuritaire de documents officiels (passeports, visas, cartes d'identité, permis de conduire, cartes grises, cartes bancaires, chèques bancaires, diplômes, certificats, titres de transport, cartes de contrôle d'accès, badges, étiquettes, actes légaux, contrats, registres légaux, plans cadastraux, documents fiduciaires, billets de banque, plans de fabrication ou autres plans...) portant des inscriptions, notamment des inscriptions à lire telles que des mentions variables (nom, prénom, adresse, photo, signature... d'un titulaire ou des parties...) et/ou des mentions communes (motifs sécuritaires, matrices, cadres, noms de champs, sceaux, hologrammes, signatures, valeurs,...) à protéger contre les tentatives de falsification et/ou les contrefaçons et/ou pour l'authentification et/ou pour garantir leur intégrité (c'est-à-dire le fait qu'elles n'ont pas été altérées ou modifiées).

US 2006/0145469 décrit un document, en particulier un chèque, protégé contre la falsification, comprenant une première marque formée à l'aide d'une encre procurant un effet nacré et une deuxième marque formée à l'aide d'une encre thermochromique. La marque formée à l'aide d'une encre thermochromique est opaque et n'est appliquée que sur une portion limitée du document. La marque formée à l'aide d'une encre thermochromique est visible à la température ambiante et disparait lorsque sa température est augmentée, par exemple par application d'un pouce sur ladite marque, la marque réapparaissant lors du retour à la température après retrait de la source de chaleur.

On connait également de WO 2009/106242 et CA 2 716 892 un dispositif sécuritaire comprenant au moins une couche d'encre thermochromique recouvrant et cachant deux motifs, le premier motif devenant visible lorsqu'on soumet l'encre thermochromique à une première augmentation de température et le deuxième motif devenant visible lorsqu'on soumet l'encre thermochromique à une deuxième augmentation de température différente de la première. La couche d'encre thermochromique forme un motif opaque de taille limitée sur le document à protéger.

Dans ces dispositifs connus, les motifs formés à base d'encre thermochromique sont opaques à une température inférieure à la température d'activation des thermochromes et deviennent incolores et transparents à partir et au-delà de la température d'activation des thermochromes. Les motifs formés à base d'encre thermochromique ne sont donc transparents que dans leur état activé et ne permettent pas de laisser visibles des informations imprimées sur le document à protéger dans leur état non activé.

En outre, les images thermochromiques de tels dispositifs connus sont limitées en termes de finesse d'impression et de richesse des couleurs.

Le document EP 0 271 941 décrit un procédé de réalisation d'un produit à film protecteur transférable, un produit obtenu pour la protection de documents, tout comme un document ainsi protégé, selon le préambule des revendications 1, 11 et 15.

L'invention vise à pallier les inconvénients des différents dispositifs de l'état de la technique et à proposer un procédé et un dispositif de protection sécuritaire permettant de laisser visibles de façon permanente des inscriptions à protéger portées par -notamment figurant sur- le document officiel.

L'invention vise également à proposer un procédé et un dispositif de protection sécuritaire de premier niveau qui soient authentifiables par visualisation normale, sans nécessiter d'instrument spécifique tel qu'une lampe UV par exemple.

L'invention vise également à proposer un procédé et un dispositif de protection sécuritaire permettant une authentification rapide d'un document, en particulier d'un document officiel, et sans nécessiter une inclinaison particulière ou une déformation du document.

L'invention vise à proposer un dispositif de protection sécuritaire durable, et en particulier dont la durée de vie est supérieure à 1 an et pouvant aller jusqu'à 10 ans ou plus.

Pour ce faire, l'invention concerne un procédé de protection sécuritaire d'une portion de surface d'une couche d'un document officiel portant des inscriptions à protéger dans lequel :
- une couche de sécurité transparente est appliquée sur ladite portion de surface de façon à recouvrir lesdites inscriptions à protéger, caractérisé en ce que :
- on choisit une couche de sécurité transparente comprenant au moins une image imprimée semi-transparente comprenant au moins un liant transparent et au moins un pigment thermochromique adapté pour changer de couleur lors d'une variation prédéterminée de température,
- ladite image imprimée semi-transparente fait apparaitre dans un premier état, dit état non activé, à au moins une première température, au moins un motif visible semi-transparent de façon à permettre la visualisation desdites inscriptions à protéger à travers cette image, ledit motif n'étant pas visible dans un second état, dit état activé, à au moins une deuxième température différente de la première température,
- la proportion des pigments thermochromiques dans le liant est telle que l'image semi-transparente permet la visualisation desdites inscriptions à protéger à travers cette image à l'état non activé des pigments thermochromiques.

Dans certains modes de réalisation possibles de l'invention, ladite couche de sécurité transparente peut être une couche faisant partie du document officiel, notamment une couche extérieure de celui-ci, par exemple lorsque le document officiel est une carte en matière synthétique (par exemple une carte formée de plusieurs couches de polycarbonate superposées et laminées). Dans ces modes de réalisation ladite image imprimée semi-transparente peut être imprimée sur une telle couche extérieure du document officiel avant lamination à chaud et sous pression des différentes couches constitutives du document officiel, ou au contraire après une telle lamination. Ladite image imprimée semi-transparente est imprimée de façon à recouvrir lesdites inscriptions à protéger portées par une couche sous-jacente du document.

L'invention s'étend à un dispositif de protection sécuritaire d'une portion de surface d'une couche d'un document officiel portant des inscriptions à protéger, ledit dispositif comprenant une couche de sécurité transparente s'étendant selon un format adapté à celui de ladite portion de surface, caractérisé en ce que :
- la couche de sécurité transparente comprend au moins une image imprimée semi-transparente comprenant au moins un liant transparent et au moins un pigment thermochromique adapté pour changer de couleur lors d'une variation prédéterminée de température,
- ladite image imprimée semi-transparente fait apparaitre dans un premier état, dit état non activé, à au moins une première température, au moins un motif visible semi-transparent de façon à permettre la visualisation des inscriptions à protéger à travers cette image, ledit motif n'étant pas visible dans un second état, dit état activé, à au moins une deuxième température différente de la première température,
- la proportion des pigments thermochromiques dans le liant est telle que l'image semi-transparente permet la visualisation des inscriptions à protéger à travers cette image à l'état non activé des pigments thermochromiques.

Dans certains modes de réalisation possibles de l'invention, ladite couche de sécurité transparente est un film de sécurité transparent. L'invention concerne donc en particulier un procédé de protection sécuritaire d'une portion de surface d'un document officiel portant des inscriptions dans lequel :
- on choisit un dispositif de protection comprenant un film de sécurité transparent s'étendant selon un format adapté à celui de ladite portion de surface et porté par un film support,
- on applique -notamment par transfert- ledit film de sécurité transparent sur ladite portion de surface,
caractérisé en ce que :
- on choisit un dispositif de protection dont le film de sécurité transparent comprend au moins une image imprimée semi-transparente comprenant au moins un liant transparent et au moins un pigment thermochromique adapté pour changer de couleur lors d'une variation prédéterminée de température,
- ladite image imprimée semi-transparente fait apparaitre dans un premier état, dit état non activé, à au moins une première température, au moins un motif visible semi-transparent de façon à permettre la visualisation desdites inscriptions à protéger à travers cette image, ledit motif n'étant pas visible dans un second état, dit état activé, à au moins une deuxième température différente de la première température,
- la proportion des pigments thermochromiques dans le liant est telle que l'image semi-transparente permette la visualisation desdites inscriptions à protéger à travers cette image à l'état non activé des pigments thermochromiques.

L'invention s'étend aussi à un dispositif de protection sécuritaire d'une portion de surface d'un document officiel portant des inscriptions, ledit dispositif comprenant :
- un film de sécurité transparent s'étendant selon un format adapté à celui de ladite portion de surface,
- un film support portant ledit film de sécurité transparent, caractérisé en ce que :
- le film de sécurité transparent comprend au moins une image imprimée semi-transparente comprenant au moins un liant transparent et au moins un pigment thermochromique adapté pour changer de couleur lors d'une variation prédéterminée de température,
- ladite image imprimée semi-transparente fait apparaitre dans un premier état, dit état non activé, à au moins une première température, au moins un motif visible semi-transparent de façon à permettre la visualisation des inscriptions à travers cette image, ledit motif n'étant pas visible dans un second état, dit état activé, à au moins une deuxième température différente de la première température,
- la proportion des pigments thermochromiques dans le liant est telle que l'image semi-transparente permette la visualisation des inscriptions à travers cette image à l'état non activé des pigments thermochromiques.

De façon totalement inattendue, les inventeurs ont observé qu'il est possible d'imprimer une image à l'aide d'au moins une composition d'impression comprenant des pigments thermochromiques, et d'obtenir une image imprimée semi-transparente et colorée (présentant un motif visible semi-transparent) dans un état non activé des pigments thermochromiques, à au moins une première température, et totalement transparente et incolore (sans motif visible semi-transparent) dans un état activé des pigments thermochromiques, à au moins une deuxième température, différente de la première température. On obtient ainsi un document officiel présentant un dispositif de protection sécuritaire adapté pour pouvoir recouvrir des inscriptions figurant sur ledit document officiel sans empêcher leur visibilité et/ou leur lecture.

Un procédé et un dispositif selon l'invention permettent donc d'améliorer la sécurité des documents officiels puisqu'ils permettent ainsi de protéger de plus grandes portions de surface de ceux-ci et en particulier les portions de surface portant des inscriptions à lire dont il est souhaitable de toujours permettre la lecture (à l'état activé comme à l'état non activé).

En particulier, avantageusement et selon l'invention, la première température est inférieure à la deuxième température. De cette façon, une augmentation de température permet de passer de l'état non activé transparent et coloré, à l'état activé transparent et incolore.

En particulier, avantageusement et selon l'invention, on choisit les pigments thermochromiques de façon à ce qu'ils se trouvent à l'état transparent et coloré (état non activé) à température ambiante (en particulier à une température comprise entre 15°C et 35°C).

En particulier, avantageusement et selon l'invention, on choisit les pigments thermochromiques de façon à ce qu'ils présentent au moins une température d'activation comprise entre 20°C et 50°C, notamment entre 25°C et 35°C.

On peut ainsi par exemple passer de l'état non activé à l'état activé par un échauffement obtenu par un simple contact d'un doigt ou de la main sur la surface d'une image imprimée selon l'invention, et éventuellement un léger frottement des doigts à la surface d'une image imprimée selon l'invention.

La couche de sécurité transparente -notamment le film de sécurité transparent- peut être formée de tout matériau adapté pour pouvoir être imprimé. Avantageusement et selon l'invention, la couche de sécurité transparente -notamment le film de sécurité transparent- est formée d'au moins un matériau choisi parmi les matériaux cellulosiques et les matériaux polymères.

En particulier, dans les modes de réalisation où la couche de sécurité transparente est un film de sécurité transparent porté par un film support, le dispositif de protection selon l'invention est avantageusement un dispositif de transfert -notamment un dispositif de transfert à chaud-. Ainsi, avantageusement et selon l'invention, le film support portant le film de sécurité transparent est adapté pour permettre le transfert, notamment le transfert à chaud, du film de sécurité transparent sur ladite portion de surface, par lamination du dispositif de protection sécuritaire sur ladite portion de surface. Avantageusement et selon l'invention, le film de sécurité transparent est formé d'au moins un matériau polymère choisi parmi les polycarbonates, les polychlorures de vinyle (PVC), les polyéthylènes téréphtalate (PET), les polyéthylènes téréphtalate glycolisés (PETG), leurs copolymères et leurs mélanges.

Le support portant ledit film de sécurité transparent peut être formé de tout matériau rigide ou souple, multicouches ou non, et être formé d'au moins un matériau choisi parmi les matériaux cellulosiques et les matériaux polymères. Avantageusement et selon l'invention, le support est formé d'au moins un matériau cellulosiques choisi parmi les papiers, notamment les papiers de sécurité. Avantageusement et selon l'invention, le support est formé d'au moins un matériau polymère choisi parmi les polycarbonates, les polychlorures de vinyle (PVC), les polyéthylènes téréphtalate (PET), les polyéthylènes téréphtalate glycolisés (PETG), leurs copolymères et leurs mélanges.

L'ensemble formé par ledit support et ledit film de sécurité transparent peut par exemple être un film transfert commercialisé par la société FASVER Baillargues (France) sous la référence Fasprotek™ ou Passprotek™, ou Fasfilm™ ou encore Transfilm™, et/ou conformes à EP-0271941 et US-5232527, le film de sécurité transparent comprenant au moins une image imprimée semi-transparente selon l'invention.

En outre, avantageusement et selon l'invention, ladite image semi-transparente est une image colorée. En particulier, avantageusement et selon l'invention, ladite image semi-transparente est une image polychromatique.

Avantageusement et selon l'invention, ladite image semi-transparente est imprimée sur ladite couche de sécurité transparente -notamment sur ledit film de sécurité transparent-, de préférence sur une face ne formant pas une face extérieure du document officiel. L'image semi-transparente peut être imprimée à l'aide de toute technique d'impression, par exemple par sérigraphie, jet d'encre ou encore par flexographie. En particulier avantageusement et selon l'invention, ladite image semi-transparente peut être imprimée à l'aide d'une technique d'impression permettant la réalisation de motifs très variés, notamment des motifs fins et complexes. Il est notamment possible d'obtenir des graphismes ou textes de largeur de trait inférieure à 200 µm, notamment largeur de trait inférieure à 100 µm. Ainsi, avantageusement et selon l'invention, ladite image semi-transparente est imprimée avec une linéature supérieure à 80 lignes par pouces, et en particulier avec une linéature supérieure à 120 lignes par pouces.

En particulier, avantageusement et selon l'invention, ladite image semi-transparente est imprimée par impression sérigraphique, selon la technique de la quadrichromie. En effet, les inventeurs ont constaté de façon tout à fait surprenante qu'il est possible d'imprimer une composition d'impression comprenant des pigments thermochromiques selon cette technique. Il est ainsi possible de préparer une grande variété d'images semi-transparentes en termes de formes, de taille et de couleurs.

La technique d'impression quadrichromique permet donc de reproduire un large spectre colorimétrique à partir des couleurs suivantes : cyan, magenta et jaune et de noir. Ainsi, avantageusement et selon l'invention, ladite image semi-transparente est imprimée par impressions successives :
- d'une première composition d'impression comprenant des pigments thermochromiques de couleur cyan,
- d'une deuxième composition d'impression comprenant des pigments thermochromiques de couleur magenta,
- d'une troisième composition d'impression comprenant des pigments thermochromiques de couleur jaune, et
- d'une quatrième composition d'impression comprenant des pigments thermochromiques de couleur noire.

L'image imprimée semi-transparente comprend au moins un liant transparent adapté pour ne pas gêner la visualisation des inscriptions portées par le document officiel à protéger. Avantageusement et selon l'invention, on choisit ledit liant transparent dans le groupe formé des liants polymériques transparents.

Avantageusement et selon l'invention, le liant transparent est choisi dans le groupe formé des résines thermoplastiques transparentes. En particulier, avantageusement et selon l'invention, on choisit ledit liant transparent dans le groupe formé des matériaux polymères tels que les polycarbonates, les polyesters, les polyacrylates, les polyacryliques, notamment les polyméthacrylates, les polyuréthanes, les polyéthers, les polycaprolactones, leurs mélanges et leurs copolymères. Le liant est par exemple un copolymère de méthacrylate de méthyle tel qu'une résine commercialisée par DOW CHEMICAL (Midland, USA) sous la référence Paraloid B®.

Avantageusement et selon l'invention, ladite image semi-transparente est imprimée à l'aide d'au moins une composition d'impression (encre) comprenant des pigments thermochromiques et au moins un liant transparent.

Avantageusement et selon l'invention, ladite image semi-transparente est imprimée à l'aide d'au moins une composition d'impression comprenant des pigments thermochromiques choisis dans le groupe formé des capsules (micro-capsules) comprenant au moins un leuco-colorant (également appelé « développeur de couleur »), au moins un acide faible et au moins un liquide organique (à titre de solvant). Les pigments thermochromiques comprennent donc, à l'intérieur de chaque micro-capsule, une composition colorante comprenant au moins un leuco-colorant, au moins un acide faible et au moins un liquide organique. De tels pigments thermochromiques sont connus et sont par exemple commercialisés par la société Polychrom CO LTD (Ansan city, Corée). Ils présentent par exemple une taille moyenne comprise entre 1 µm et 100 µm, notamment entre 2 µm et 60 µm.

La proportion de pigments thermochromiques dans la composition d'impression est choisie de façon à obtenir une image semi-transparente, et donc à permettre la visualisation des inscriptions imprimées sur ledit document officiel à travers l'image semi-transparente. Avantageusement et selon l'invention, ladite image semi-transparente est imprimée à l'aide d'au moins une composition d'impression comprenant entre 9 % et 22 % en poids de pigments thermochromiques.

La couleur cyan peut être obtenue par un mélange d'un colorant vert et d'un colorant bleu, par exemple le chlorure de 4-[4,4'-bis(diméthylamino)benzhydrylidène]cyclohexa-2,5-dien-1-ilidène] diméthyl-ammonium (appelé « *Crystal Violet Lactone* ») pour la couleur bleu et le 3-diéthylamino-7-dibenzylaminofluoran pour la couleur verte.

La couleur magenta peut être obtenue par un mélange d'un colorant rouge et d'un colorant bleu.

Pour la couleur rouge plusieurs molécules peuvent être utilisées comme le 3,3-bis(1-octyl-2-méthyl-indol-3-yl)phthalide, le 6'éthyl(p-tolyl)aminol-2'- méthylspiro[isobenzofurane-1(3H), le 9-[9H]xanthène-3-one, le spiro[12H-benzo[a]xanthène-12 ou encore le 1'(3'H)-isobenzofurane]-3'-one 9-[éthyl(3-méthylbutyl)amino].

Pour la couleur jaune on peut par exemple utiliser la benzénamine, N,N-diméthyl-4-[2-[2-(octyloxy)phényl]-6- phényl-4-pyridinyl].

L'acide faible est par exemple choisi parmi les acides de type bisphénol A ou bisphénol S.

Le solvant contenu dans les micro-capsules de pigments thermochromiques est en général un solvant polaire comme un alcool ou un ester.

L'enveloppe polymérique de chaque micro-capsule est par exemple formée d'un polymère d'encapsulation tel que la mélamine formaldéhyde.

La composition d'impression peut en outre comprendre au moins un solvant, par exemple un solvant aqueux ou organique. Avantageusement et selon l'invention, le solvant est par exemple l'éther de dipropylène glycol monométhylique et/ou le 3-éthoxypropanoate d'éthyle.

Avantageusement et selon l'invention, on choisit un solvant adapté pour permettre l'impression d'une image semi-transparente d'un dispositif selon l'invention. En particulier, avantageusement et selon l'invention, on choisit ledit solvant de façon à ce qu'il soit compatible avec les pigments thermochromiques de la composition d'impression utilisée, c'est-à-dire qui ne soit pas susceptibles d'endommager les micro-capsules polymériques desdits pigments thermochromiques ni de perturber la composition colorante comprise dans les micro-capsules desdits pigments thermochromiques (système leuco-colorant et acide faible).

Avantageusement et selon l'invention, ladite composition d'impression comprend ainsi :
- entre 9 % et 22 % en poids de capsules thermochromiques,
- entre 30 % et 45 % en poids de liant transparent,
- entre 25 % et 50 % en poids de solvant.

Avantageusement et selon l'invention, on imprime ladite image semi-transparente sur le film de sécurité transparent et on applique ledit film de sécurité transparent sur ladite portion de surface de façon à ce que l'image semi-transparente recouvre les inscriptions. On obtient alors des dispositifs de protection de grande taille et transparents permettant de visualiser les inscriptions imprimées sur le document officiel.

Avantageusement et selon l'invention, ladite image semi-transparente s'étend selon un format similaire à celui du film de sécurité transparent. En effet, les films de sécurité de grande taille sont plus difficiles à falsifier, et en particulier à reproduire. En outre les films de sécurité de grande taille sont également plus difficiles à retirer et à réutiliser sur un autre document. Un procédé et un dispositif selon l'invention permettent donc de préparer des dispositifs de protection de grande taille sans empêcher la visualisation des inscriptions à lire imprimées sur le document officiel.

D'autre part, il est possible d'imprimer d'autres types d'encres sécuritaires à la surface du document officiel et/ou sur et/ou dans le film de sécurité ou d'ajouter tout autre dispositif de protection sécuritaire de façon à renforcer encore sa protection. Il peut par exemple s'agir d'au moins une inscription formée d'une composition d'encre de sécurité choisie dans le groupe constitué des encres photoluminescentes -notamment sous éclairage ultraviolet-, des encres fluorescentes, des encres photochromiques, des encres thermochromiques, des encres iridescentes, des encres à pigments interférentiels, des encres à colorant soluble, et des encres à liant soluble. Avantageusement et selon l'invention le document officiel et/ou le film de sécurité peuvent également comprendre au moins une marque de sécurité, notamment choisie dans le groupe des marques holographiques et des marques métallisées (c'est-à-dire formées d'au moins une impression d'une encre produisant un effet métallique et/ou incorporant des particules métalliques et/ou d'une couche métallique).

Il est possible d'appliquer une couche de vernis de protection supplémentaire sur la surface libre de la dernière couche de composition d'impression thermochromique déposée sur le film de sécurité transparent, de façon à protéger le l'image semi-transparente du dispositif de protection ainsi obtenu. Toutefois, l'application d'un tel vernis de protection n'est pas indispensable.

Il est également possible d'appliquer une couche d'adhésif au-dessus du film de sécurité transparent (sur la surface libre de la dernière couche de composition d'impression thermochromique ou encore sur l'éventuelle couche de vernis de protection), de façon à permettre le transfert du dispositif de protection et la fixation de celui-ci sur un document officiel à protéger.

En outre, bien qu'il ne soit pas indispensable d'ajouter d'additifs anti-UV, d'additifs de type HALS (« *Hindered Amine Light Stabilizers* ») ou encore d'antioxydants dans la composition d'impression thermochromique, il est possible de le faire, ceux-ci étant toutefois choisis pour être compatibles avec une utilisation dans la composition d'impression thermochromique.

Par ailleurs, pour améliorer la compatibilité entre la composition d'impression thermochromique et le film transparent, il est possible de choisir le liant et/ou le film de sécurité transparent de façon à ce qu'ils soient principalement formés d'au moins un même matériau polymère.

L'invention s'étend à un document officiel obtenu par un procédé selon l'invention. Elle concerne donc un document officiel comprenant au moins une couche de sécurité transparente recouvrant au moins une portion de surface d'une couche portant des inscriptions :
caractérisé en ce que :
   - la couche de sécurité transparente comprend au moins une image imprimée semi-transparente comprenant au moins un liant transparent et au moins un pigment thermochromique adapté pour changer de couleur lors d'une variation prédéterminée de température,
   - ladite image imprimée semi-transparente fait apparaitre dans un premier état, dit état non activé, à au moins une première température, au moins un motif visible semi-transparent de façon à permettre la visualisation desdites inscriptions à travers cette image, ledit motif n'étant pas visible dans un second état, dit état activé, à au moins une deuxième température différente de la première température,
   - la proportion des pigments thermochromiques dans le liant est telle que l'image semi-transparente permette la visualisation desdites inscriptions à travers cette image à l'état non activé des pigments thermochromiques.

Plus particulièrement, l'invention concerne un document officiel comprenant :
- au moins un film de sécurité transparent recouvrant au moins une portion de surface de ce document officiel, ledit document officiel portant des inscriptions,
- le film de sécurité transparent s'étendant selon un format adapté à celui de ladite portion de surface,
caractérisé en ce que :
- le film de sécurité transparent comprend au moins une image imprimée semi-transparente comprenant au moins un liant transparent et au moins un pigment thermochromique adapté pour changer de couleur lors d'une variation prédéterminée de température,
- ladite image imprimée semi-transparente fait apparaitre dans un premier état, dit état non activé, à au moins une première température, au moins un motif visible semi-transparent de façon à permettre la visualisation desdites inscriptions à travers cette image, ledit motif n'étant pas visible dans un second état, dit état activé, à au moins une deuxième température différente de la première température,
- la proportion des pigments thermochromiques dans le liant est telle que l'image semi-transparente permette la visualisation desdites inscriptions à travers cette image à l'état non activé des pigments thermochromiques.

L'invention concerne aussi un procédé et un dispositif de protection sécuritaire ainsi qu'un document officiel caractérisés en combinaison par tout ou partie des caractéristiques mentionnées ci-dessus ou ci-après.

D'autres buts, caractéristiques et avantages de l'invention apparaissent à la lecture de la description suivante d'un de ses modes de réalisation préférentiel donné à titre d'exemple non limitatif, et qui se réfère aux figures annexées dans lesquelles :
- la figure 1 est une vue schématique en coupe d'un dispositif de protection sécuritaire selon l'invention,
- la figure 2 est une vue schématique d'un document officiel comprenant un dispositif de protection sécuritaire selon l'invention, l'image semi-transparente étant visible,
- la figure 3 est une vue schématique d'un document officiel comprenant un dispositif de protection sécuritaire selon l'invention, l'image semi-transparente n'étant pas visible.

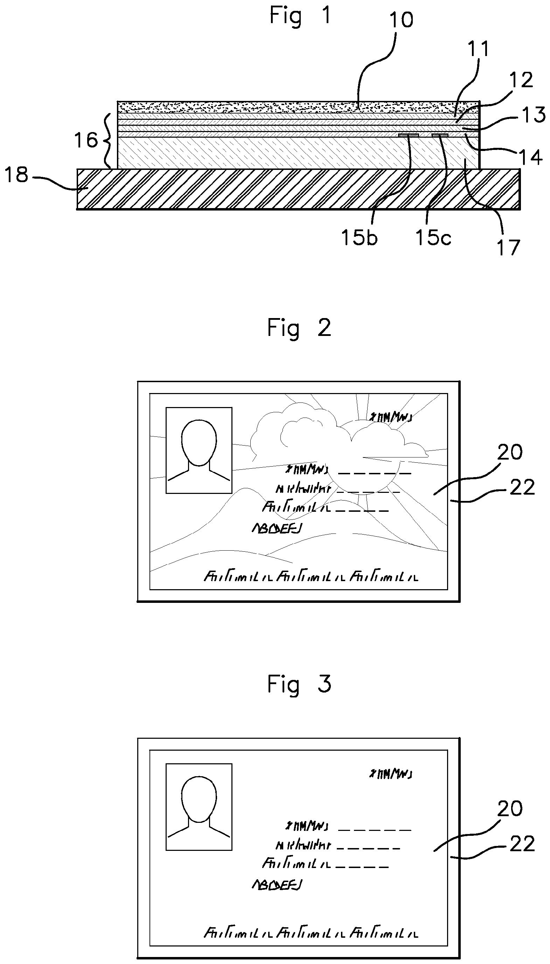

Sur les figures 1 à 3, les échelles ne sont pas respectées, à des fins d'illustration. En particulier, sur la figure 1 les épaisseurs sont exagérément agrandies.

On réalise un dispositif de protection comprenant un film 16 de sécurité transparent incorporant une image semi-transparente polychromatique thermochromique. Le film 16 de sécurité est porté par un support 18.

Ce dispositif de protection peut constituer un transfert à chaud, c'est-à-dire peut être utilisé pour appliquer le film 16 de sécurité et le transférer par lamination à chaud sur une portion de surface d'un document officiel 22, comme représenté sur les figures 2 et 3, notamment en vue de la protéger contre les falsifications et/ou pour authentifier le document officiel et/ou des inscriptions variables ou communes préalablement imprimées sur cette portion de surface et/ou pour garantir son intégrité.

On prépare au moins une composition d'impression (ou encre thermochromique). Chaque composition d'impression comprend :
- entre 9 % et 22 % en poids de pigments (capsules) thermochromiques,
- entre 30 % et 45 % en poids d'au moins un liant transparent, tel qu'une résine thermoplastique, en particulier une résine thermoplastique acrylique,
- entre 25 % et 50 % en poids de solvant tel que l'éther de dipropylène glycol monométhylique ou le 3-éthoxypropanoate d'éthyle.

Les microcapsules thermochromiques comprennent au moins un leuco-colorant (également appelé « développeur de couleur »), au moins un acide faible et au moins un liquide organique (tel qu'un ester d'acide gras).

Les leuco-colorants sont des molécules qui peuvent prendre deux formes différentes : une forme colorée et une forme incolore.

Chaque encre thermochromique peut également comprendre tout type d'additif (en particulier moins de 5% en poids par rapport au poids total de l'encre thermochromique). On peut par exemple ajouter des additifs anti-UV tels que benzotriazole d'hydroxyphényle (BTZ) ou la 2-hydroxyphényl-s-triazine (HDT).

À partir d'une image ou photographie traitée en synthèse soustractive on obtient quatre films ou négatifs tramés correspondants aux quatre couleurs primaires (jaune, magenta, cyan, noir). La reproduction de l'image est effectuée en imprimant successivement les quatre filtres de l'image avec les couleurs primaires cyan, magenta, jaune et le noir.

Sur un support 18 transparent par exemple formé en polystyrène et portant un film 16 de sécurité sont imprimées successivement par exemple par sérigraphie les quatre images filtrées monochromatiques. Une couche séparative de vernis (non représentée) peut éventuellement être prévue entre chaque image filtrée monochromatique.

Le film 16 de sécurité peut être transparent ou semi-transparent. Il comprend par exemple une couche continue 17 formée en polyuréthane. L'ensemble formé par la couche continue 17 et le support 18 transparent peut par exemple être un film de type Fasprotek™ ou Transfilm™ (FASVER, Baillargues, France).

Alternativement, le film 16 de sécurité peut également comprendre une couche unique (non supportée par un support), par exemple un film de type Fasfilm™ (FASVER, Baillargues, France). Dans ce cas, la couche continue 17 est par exemple formée en polyéthylène téréphtalate ou en polycarbonate. En outre, dans ce dernier cas, la couche 10 d'adhésif n'est pas nécessaire pour permettre le transfert par laminage à chaud du film 16 de sécurité sur une portion de surface d'un document officiel.

Chaque film de sécurité peut comprendre une unique couche de vernis séparable. Chaque film de sécurité peut incorporer des motifs 15b, 15c de sécurité imprimés sur et/ou sous la couche de vernis séparable par exemple. Ces motifs 15b, 15c de sécurité peuvent par exemple être formés de motifs visibles uniquement sous certaines conditions d'éclairage (WO 0024587, FR 2834484), de motifs dont l'aspect varie selon l'angle de visualisation, de motifs iridescents, de motifs à pigments interférentiels...

En quadrichromie on prépare ainsi quatre compositions thermochromiques. On imprime la première composition 14 thermochromique de couleur cyan en utilisant et en reproduisant respectivement l'image filtrée monochromatique (obtenue avec le filtre du cyan), de façon à former une première image monochromatique thermochromique semi-transparente. On imprime ensuite au-dessus la deuxième composition 13 thermochromique de couleur magenta en utilisant et en reproduisant respectivement l'image filtrée monochromatique (obtenue avec le filtre du magenta). On imprime ensuite au-dessus la troisième composition 12 thermochromique de couleur jaune en utilisant et en reproduisant respectivement l'image filtrée monochromatique (obtenue avec le filtre du jaune). On imprime ensuite au-dessus la quatrième composition 11 thermochromique de couleur noire en utilisant et en reproduisant respectivement l'image filtrée monochromatique (obtenue avec le filtre du noir). Un séchage peut être prévu entre l'impression de chaque composition thermochromique, à la température ambiante ou par exemple à l'aide d'un flux d'air chaud.

On imprime ensuite une couche 10 d'adhésif sur la dernière couche de l'image semi-transparente ainsi imprimée. Cette couche d'adhésif permet le transfert du film de sécurité et la fixation de celui-ci sur un document officiel.

On peut également ajouter un film protecteur (non représenté) sur la couche d'adhésif.

Une couche de détachement peut éventuellement être prévue entre le film 16 de sécurité transparent et le support 18 transparent, de façon à faciliter l'enlèvement du support 18 transparent, une fois le dispositif de protection transféré sur un substrat tel qu'un document officiel.

On obtient ainsi un dispositif de protection (représenté en figure 1) dont le film 16 de sécurité transparent comprend une image imprimée semi-transparente polychromatique.

Ensuite, s'il est prévu, on retire le film protecteur et on applique le dispositif de protection sur le document officiel. Le transfert peut être réalisé par lamination aux alentours de 100° C à 120° C pendant 5 secondes sur un document officiel 22.

Les figures 2 et 3 représentent un document officiel 22 (par exemple une carte d'identité) sur lequel on a transféré le dispositif 20 de protection sécuritaire tel que préparé précédemment.

Le document officiel 22 présente des inscriptions, notamment des mentions variables telles que des données identitaires. Les inscriptions figurant sur le document officiel 22 sont de préférence noires et en particulier de couleur (ou de nuance) différente des couleurs des motifs de l'image semi-transparent les recouvrant, de manière à ce qu'elle se distingue facilement à l'oeil nu (sous lumière visible).

Dans l'état non activé représenté en figure 2, l'image polychromatique semi-transparente est visible et permet la visualisation des inscriptions à travers cette image.

Après un léger chauffage au contact des doigts ou de la main, on passe à l'état activé représenté en figure 3, et l'image polychromatique semi-transparente n'est plus visible (incolore), la visualisation des inscriptions à travers cette image étant toujours possible.

Il est à noter que dans l'exemple représenté schématiquement sur les figures 2 et 3, les motifs sont représentés avec des formes géométriques simples. Néanmoins, l'invention permet de réaliser des motifs de haute définition, avec des formes très complexes et très fines.

### EXEMPLE 1 :

On prépare quatre encres thermochromiques comprenant chacune :
- 20 % en poids de pigments (capsules) thermochromiques,
- 40 % en poids de copolymère de méthacrylate de méthyle à titre de liant transparent, et
- 26 % en poids d'éther de dipropylène glycol monométhylique,
- 10 % de 3-éthoxypropanoate d'éthyle,
- 4 % en poids de 2-hydroxyphényl-s-triazine (additif anti-UV).

Chaque encre thermochromique présente une viscosité de l'ordre de 7 Pa.s.

Les capsules thermochromiques de la première encre thermochromique, pour obtenir la couleur cyan, sont formées d'un mélange de capsules thermochromiques vertes et bleues dans une proportion d'environ 50% - 50%. Pour la couleur bleu, le leuco-colorant contenu dans les microcapsules est le « *Crystal Violet Lactone* » et pour la couleur verte le leuco-colorant contenu dans les microcapsules est le 3-diethylamino-7-dibenzylaminofluoran.

Les capsules thermochromiques de la deuxième encre thermochromique pour obtenir la couleur magenta, sont formées d'un mélange de capsules thermochromiques rouges et bleues dans une proportion d'environ 50% - 50%.

Les capsules thermochromiques de la troisième encre thermochromique sont des capsules thermochromiques de couleur jaune.

Les capsules thermochromiques de la quatrième encre thermochromique sont des capsules thermochromiques noires.

Ces capsules thermochromiques sont commercialisées par la société Gem'innov® (Gémenos, France) et activables à la température d'activation de +30°C. Les capsules thermochromiques présentent une taille moyenne de 10 µm. Le liquide organique contenu dans les capsules thermochromiques est un ester d'acide gras.

À partir d'une image ou photographie traitée en synthèse soustractive on obtient quatre films ou négatifs tramés correspondants aux quatre couleurs primaires (jaune, magenta, cyan, noir). La reproduction de l'image est effectuée en imprimant successivement les quatre filtres de l'image avec les quatre couleurs primaires cyan, magenta, jaune et noir.

On imprime successivement par sérigraphie les quatre images filtrées monochromatiques sur la face libre d'un film de sécurité transparent porté par un film support (film commercialisé sous la marque FASPROTEK® par la société Fasver (Baillargues, France). Chaque écran sérigraphique est réalisé à partir d'un tissu dont la maille comprend de l'ordre de 150 fils/cm, chaque fil présentant un diamètre de 31 µm.

On imprime l'une après l'autre la première encre thermochromique de couleur cyan, la deuxième encre thermochromique de couleur magenta, la troisième encre thermochromique de couleur jaune et la quatrième encre thermochromique noire en utilisant et en reproduisant respectivement l'image filtrée monochromatique obtenue avec chaque filtre. Après l'impression de chaque encre thermochromique on la sèche à l'aide d'un flux continu d'air à 70°C pendant 1min50s. On imprime ensuite une couche d'adhésif sur la quatrième encre thermochromique noire.

On obtient ainsi un dispositif de protection dont le film de sécurité transparent comprend une image imprimée semi-transparente.

On applique ensuite le film de sécurité transparent du dispositif de protection sur un document officiel (page de passeport) par laminage à chaud.

L'image semi-transparente ainsi disposée sur le document officiel est polychromatique à la température ambiante (de l'ordre de 18 à 25 °C) ce qui n'empêche pas la lecture des inscriptions figurant sur le document officiel, et devient invisible (car incolore) à partir de 30°C, lorsqu'on touche l'image semi-transparente avec les doigts ou la main par exemple. L'image redevient ensuite spontanément polychromatique en quelques secondes.

En outre, avec le dispositif de protection de l'exemple mentionné ci-dessus appliqué sur un document officiel on réalise les tests de tenue à la lumière suivants :
- résistance à la lumière artificielle mesurée selon les normes ISO 24789-1 et ISO 24789-2 : on soumet les échantillons au rayonnement d'une lampe à arc au xénon pendant 24 heures en présence du filtre de lumière et la température du panneau noir étant de 50°C;
- résistance à la lumière artificielle mesurée selon la méthode définie par l'organisation internationale de l'aviation civile (« *ICAO* ») concernant la durabilité des passeports (version: 3.2 datée du 30 août 2006, paragraphe 5.14) : on soumet les échantillons au rayonnement d'une lampe à arc au xénon refroidie à l'air en présence d'un filtre des rayonnements de longueurs d'onde inférieures à 310 nm ;
- résistance aux ultraviolets A mesurée selon les normes ISO 4582 et DIN 6167 : on place les échantillons 20 heures à 60°C et à 0,72 W.m-2.nm-1.

Après chaque test, on relève l'écart de couleur (avant et après le test) à l'état non activé coloré du dispositif de protection. L'écart de couleur est mesuré selon la norme ISO 7724-3 à l'aide d'un spectro-colorimètre DR LANGE® (Düsseldorf, Allemagne). Les écarts de couleur (delta E) ainsi mesurés dans chacun des tests de tenue à la lumière précédents sont tous inférieurs à 5, c'est-à-dire inférieurs au seuil pour lequel l'oeil humain perçoit une différence de couleur.

De même, concernant la tenue climatique du dispositif de protection de l'exemple mentionné ci-dessus appliqué sur un document officiel on réalise les tests suivants :
- résistance climatique mesurée selon les normes NF T 76-109 et DIN 6167 : on soumet les échantillons à 7 cycles de vieillissement climatique de 12 heures chacun (soit 84 heures au total) dans les conditions suivantes : 70°C pendant 5 heures, refroidissement jusqu'à -40°C en 1 heure, -40°C pendant 5 heures puis montée en température jusqu'à 70°C, taux d'humidité relative de 90 % ;
- résistance climatique mesurée selon la méthode définie par l'organisation internationale de l'aviation civile (« *ICAO* ») concernant la durabilité des passeports (version: 3.2 datée du 30 août 2006, paragraphe 5.2) : on soumet les échantillons à 7 cycles de vieillissement climatique dans les conditions suivantes : 77°C pendant 15 minutes, passage en moins de 60 secondes à -32°C et maintien à - 32°C pendant 15 minutes ;
- résistance climatique mesurée selon la méthode définie par l'organisation internationale de l'aviation civile (« *ICAO* ») concernant la durabilité des passeports (version: 3.2 datée du 30 août 2006, paragraphe 5.3) : on soumet les échantillons une température de 77°C pendant 168 heures en présence d'un taux d'humidité relative de 50 %;
- résistance climatique mesurée selon les normes ISO 24789-1 et ISO 24789-2, paragraphe 5.7 (50°C ; taux d'humidité relative de 93 %), paragraphe 5.8 (-35°C pendant 15 min, passage en moins de 15 s à 50°C et maintien à 50°C pendant 15 min) et paragraphe 5.9 (-35°C pendant 30 min, +50°C et 20% d'humidité relative pendant 6,5h, -35°C pendant 30min, puis, +50°C et 85% d'humidité relative pendant 6,5h).

Après chaque test de tenue climatique, on relève l'écart de couleur (avant et après le test) à l'état non activé coloré du dispositif de protection. L'écart de couleur est mesuré selon la norme ISO 7724-3 à l'aide d'un spectro-colorimètre DR LANGE® (Düsseldorf, Allemagne). Les écarts de couleur (delta E) ainsi mesurés dans chacun des tests de tenue à la lumière précédents sont tous inférieurs à 5, c'est-à-dire inférieurs au seuil pour lequel l'oeil humain perçoit une différence de couleur. Les propriétés thermochromiques du dispositif de protection n'ont pas été affectées.

### EXEMPLE 2 :

Dans cet exemple on réalise des images semi-transparentes polychromatiques appliquées sur un document officiel portant des inscriptions comme indiqué à l'exemple 1, mais en faisant varier le taux de pigments dans les encres thermochromiques. On constate qu'en dessous d'un certain taux de pigments l'image semi transparente thermochromique n'est plus visible. Au-dessus d'un certain taux de pigments l'image semi transparente thermochromique empêche la visualisation des inscriptions figurant sur le document officiel.

Le tableau ci-dessous décrit les résultats obtenus.

| Proportion de pigment thermochromique (%) | Proportion de liant (%) | Proportion de solvant (%) | Proportion d'additif (%) | Aspect visuel |
|---|---|---|---|---|
| 27 | 36,5 | 33,5 | 3 | inscriptions sous-jacentes non visibles |
| 20 | 40 | 36 | 4 | inscriptions sous-jacentes visibles - Exemple 1 |
| 14.9 | 42,5 | 39,1 | 3,4 | inscriptions sous-jacentes visibles |
| 9.5 | 45,2 | 41,7 | 3,6 | inscriptions sous-jacentes visibles |
| 6.5 | 46,7 | 43,1 | 3,7 | image semi transparente thermochromique non visible |

L'invention peut faire l'objet de très nombreuses variantes de réalisation. En particulier, il est possible d'utiliser des pigments thermochromiques incolores à une température inférieure à leur température d'activation et colorés à une température supérieure à leur température d'activation. En outre l'image imprimée semi-transparente thermochromique peut être formée sur une face d'une couche transparente constitutive du document officiel lui-même, le dispositif de protection selon l'invention étant formé de cette couche transparente portant cette image imprimée semi-transparente thermochromique.

## Revendications

1. Procédé de protection sécuritaire d'une portion de surface d'une couche d'un document officiel (22) portant des inscriptions à protéger dans lequel :
- une couche de sécurité transparente est appliquée sur ladite portion de surface de façon à recouvrir lesdites inscriptions à protéger, **caractérisé en ce que** :
- on choisit une couche (16) de sécurité transparente comprenant au moins une image imprimée semi-transparente comprenant au moins un liant transparent et au moins un pigment thermochromique adapté pour changer de couleur lors d'une variation prédéterminée de température,
- ladite image imprimée semi-transparente fait apparaitre dans un premier état, dit état non activé, à au moins une première température, au moins un motif visible semi-transparent permettant la visualisation desdites inscriptions à protéger à travers cette image, ledit motif n'étant pas visible dans un second état, dit état activé, à au moins une deuxième température différente de la première température,
- la proportion des pigments thermochromiques dans le liant est telle que l'image semi-transparente permette la visualisation desdites inscriptions à protéger à travers cette image à l'état non activé des pigments thermochromiques.

2. Procédé selon la revendication 1, **caractérisé en ce que** ladite image semi-transparente est une image colorée.

3. Procédé selon l'une des revendications 1 ou 2, **caractérisé en ce que** ladite image semi-transparente est une image polychromatique.

4. Procédé selon l'une des revendications 1 à 3, **caractérisé en ce que** ladite image semi-transparente est imprimée selon la technique de la quadrichromie.

5. Procédé selon l'une des revendications 1 à 4, **caractérisé en ce que** ladite image semi-transparente est imprimée avec une linéature supérieure à 80 lignes par pouces.

6. Procédé selon l'une des revendications 1 à 5, **caractérisé en ce qu'**on choisit ledit liant transparent dans le groupe formé des liants polymériques transparents.

7. Procédé selon l'une des revendications 1 à 6, **caractérisé en ce que** ladite image semi-transparente est imprimée à l'aide d'au moins une composition d'impression comprenant au moins un pigment thermochromique choisi dans le groupe formé des capsules comprenant au moins un leuco-colorant, au moins un acide faible et au moins un solvant.

8. Procédé selon l'une des revendications 1 à 7, **caractérisé en ce que** ladite image semi-transparente est imprimée à l'aide d'au moins une composition d'impression comprenant entre 9 % et 22 % en poids de pigments thermochromiques.

9. Procédé selon l'une des revendications 1 à 8, **caractérisé en ce que** ladite image semi-transparente est imprimée par impressions successives:
- d'une première composition d'impression comprenant au moins un pigment thermochromique de couleur cyan,
- d'une deuxième composition d'impression comprenant au moins un pigment thermochromique de couleur magenta,
- d'une troisième composition d'impression comprenant au moins un pigment thermochromique de couleur jaune, et
- d'une quatrième composition d'impression comprenant au moins un pigment thermochromique de couleur noire.

10. Procédé selon l'une des revendications 1 à 9, **caractérisé en ce que** :
- on choisit un dispositif de protection comprenant un film (16) de sécurité transparent s'étendant selon un format adapté à celui de ladite portion de surface et porté par un film (18) support, ladite couche de sécurité transparente étant formée dudit film (16) de sécurité transparent,
- et on applique ledit film de sécurité transparent sur ladite portion de surface de façon à ce que l'image semi-transparente recouvre les inscriptions à protéger.

11. Dispositif de protection sécuritaire d'une portion de surface d'une couche d'un document officiel (22) portant des inscriptions à protéger, ledit dispositif comprenant une couche (16) de sécurité transparente s'étendant selon un format adapté à celui de ladite portion de surface,
**caractérisé en ce que** :
- la couche (16) de sécurité transparente comprend au moins une image imprimée semi-transparente comprenant au moins un liant transparent et au moins un pigment thermochromique adapté pour changer de couleur lors d'une variation prédéterminée de température,
- ladite image imprimée semi-transparente fait apparaitre dans un premier état, dit état non activé, à au moins une première température, au moins un motif visible semi-transparent permettant la visualisation des inscriptions à protéger à travers cette image, ledit motif n'étant pas visible dans un second état, dit état activé, à au moins une deuxième température différente de la première température,
- la proportion des pigments thermochromiques dans le liant est telle que l'image semi-transparente permet la visualisation des inscriptions à protéger à travers cette image à l'état non activé des pigments thermochromiques.

12. Dispositif selon la revendication 11, **caractérisé en ce que** ladite image semi-transparente est une image polychromatique.

13. Dispositif selon l'une des revendications 11 ou 12, **caractérisé en ce que** ladite image semi-transparente s'étend selon un format similaire à celui de la couche (16) de sécurité transparente.

14. Dispositif selon l'une des revendications 11 à 13, **caractérisé en ce qu'**il comprend un film (18) support portant un film (16) de sécurité transparent s'étendant selon un format adapté à celui de ladite portion de surface, ladite couche de sécurité transparente étant formée dudit film (16) de sécurité transparent.

15. Document officiel comprenant au moins une couche (16) de sécurité transparente recouvrant au moins une portion de surface d'une couche portant des inscriptions,
**caractérisé en ce que** :
- la couche de sécurité transparente comprend au moins une image imprimée semi-transparente comprenant au moins un liant transparent et au moins un pigment thermochromique adapté pour changer de couleur lors d'une variation prédéterminée de température,
- ladite image imprimée semi-transparente fait apparaitre dans un premier état, dit état non activé, à au moins une première température, au moins un motif visible semi-transparent permettant la visualisation desdites inscriptions à travers cette image, ledit motif n'étant pas visible dans un second état, dit état activé, à au moins une deuxième température différente de la première température,
- la proportion des pigments thermochromiques dans le liant est telle que l'image semi-transparente permet la visualisation desdites inscriptions à travers cette image à l'état non activé des pigments thermochromiques.

## Patentansprüche

1. Verfahren zum sicheren Schutz eines Oberflächenabschnitts einer Schicht eines offiziellen Dokuments (22), das zu schützende Aufschriften trägt, bei dem:
- eine transparente Sicherheitsschicht derart auf den Oberflächenabschnitt aufgebracht wird, dass die zu schützenden Aufschriften bedeckt werden, **dadurch gekennzeichnet, dass**:
- eine transparente Sicherheitsschicht (16) gewählt wird, die mindestens ein halbtransparentes Druckbild umfasst, das mindestens ein transparentes Bindemittel und mindestens ein thermochromes Pigment umfasst, das dazu beschaffen ist, bei einer vorbestimmten Temperaturänderung die Farbe zu wechseln,
- das halbtransparente Druckbild in einem ersten Zustand, der als nicht aktivierter Zustand bezeichnet wird, bei mindestens einer ersten Temperatur mindestens ein sichtbares halbtransparentes Motiv erscheinen lässt, das das Betrachten der zu schützenden Aufschriften durch dieses Bild hindurch gestattet, wobei das Motiv in einem zweiten Zustand, der als aktivierter Zustand bezeichnet wird, bei mindestens einer zweiten, von der ersten Temperatur verschieden Temperatur nicht sichtbar ist,
- das Verhältnis der thermochromen Pigmente in dem Bindemittel so ist, dass das halbtransparente Bild im nicht aktivierten Zustand der thermochromen Pigmente das Betrachten der zu schützenden Aufschriften durch dieses Bild hindurch gestattet.

2. Verfahren nach Anspruch 1, **dadurch gekennzeichnet, dass** es sich bei dem halbtransparenten Bild um ein farbiges Bild handelt.

3. Verfahren nach einem der Ansprüche 1 oder 2, **dadurch gekennzeichnet, dass** es sich bei dem halbtransparenten Bild um ein polychromatisches Bild handelt.

4. Verfahren nach einem der Ansprüche 1 bis 3, **dadurch gekennzeichnet, dass** das halbtransparente Bild nach der Technik des Vierfarbendrucks gedruckt wird.

5. Verfahren nach einem der Ansprüche 1 bis 4, **dadurch gekennzeichnet, dass** das halbtransparente Bild mit einer Rasterfrequenz von mehr als 80 Zeilen pro Zoll gedruckt wird.

6. Verfahren nach einem der Ansprüche 1 bis 5, **dadurch gekennzeichnet, dass** das transparente Bindemittel ausgewählt wird aus der Gruppe, die von den polymeren transparenten Bindemitteln gebildet wird.

7. Verfahren nach einem der Ansprüche 1 bis 6, **dadurch gekennzeichnet, dass** das halbtransparente Bild mithilfe von mindestens einer Druckzusammensetzung gedruckt wird, die mindestens ein thermochromes Pigment umfasst, das ausgewählt ist aus der Gruppe, die von den Kapseln gebildet wird, die mindestens einen Leukofarbstoff, mindestens eine schwache Säure und mindestens ein Lösemittel umfassen.

8. Verfahren nach einem der Ansprüche 1 bis 7, **dadurch gekennzeichnet, dass** das halbtransparente Bild mithilfe von mindestens einer Druckzusammensetzung gedruckt wird, die zwischen 9 Gewichts-% und 22 Gewichts-% thermochrome Pigmente umfasst.

9. Verfahren nach einem der Ansprüche 1 bis 8, **dadurch gekennzeichnet, dass** das halbtransparente Bild gedruckt wird durch aufeinanderfolgendes Drucken:
- einer ersten Druckzusammensetzung, die mindestens ein thermochromes Pigment der Farbe Cyan umfasst,
- einer zweiten Druckzusammensetzung, die mindestens ein thermochromes Pigment der Farbe Magenta umfasst,
- einer dritten Druckzusammensetzung, die mindestens ein thermochromes Pigment der Farbe Gelb umfasst, und
- einer vierten Druckzusammensetzung, die mindestens ein thermochromes Pigment der Farbe Schwarz umfasst.

10. Verfahren nach einem der Ansprüche 1 bis 9, **dadurch gekennzeichnet, dass**:
- eine Schutzvorrichtung ausgewählt wird, die einen transparenten Sicherheitsfilm (16) umfasst, der sich entsprechend einem Format, das an das des Oberflächenabschnitts angepasst ist, erstreckt und von einem Trägerfilm (18) getragen wird, wobei die transparente Sicherheitsschicht von dem transparenten Sicherheitsfilm (16) gebildet wird,
- und der transparente Sicherheitsfilm derart auf den Oberflächenabschnitt aufgebracht wird, dass das halbtransparente Bild die zu schützenden Aufschriften bedeckt.

11. Vorrichtung zum sicheren Schutz eines Oberflächenabschnitts einer Schicht eines offiziellen Dokuments (22), das zu schützende Aufschriften trägt, wobei die Vorrichtung eine transparente Sicherheitsschicht (16) umfasst, die sich entsprechend einem Format, das an das des Oberflächenabschnitts angepasst ist, erstreckt, **dadurch gekennzeichnet, dass**:
- die transparente Sicherheitsschicht (16) mindestens ein halbtransparentes Druckbild umfasst, das mindestens ein transparentes Bindemittel und mindestens ein thermochromes Pigment umfasst, das dazu beschaffen ist, bei einer vorbestimmten Temperaturänderung die Farbe zu wechseln,
- das halbtransparente Druckbild in einem ersten Zustand, der als nicht aktivierter Zustand bezeichnet wird, bei mindestens einer ersten Temperatur mindestens ein sichtbares halbtransparentes Motiv erscheinen lässt, das das Betrachten der zu schützenden Aufschriften durch dieses Bild hindurch gestattet, wobei das Motiv in einem zweiten Zustand, der als aktivierter Zustand bezeichnet wird, bei mindestens einer zweiten, von der ersten Temperatur verschieden Temperatur nicht sichtbar ist,
- das Verhältnis der thermochromen Pigmente in dem Bindemittel so ist, dass das halbtransparente Bild im nicht aktivierten Zustand der thermochromen Pigmente das Betrachten der zu schützenden Aufschriften durch dieses Bild hindurch gestattet.

12. Vorrichtung nach Anspruch 11, **dadurch gekennzeichnet, dass** es sich bei dem halbtransparenten Bild um ein polychromatisches Bild handelt.

13. Vorrichtung nach einem der Ansprüche 11 oder 12, **dadurch gekennzeichnet, dass** sich das halbtransparente Bild entsprechend einem Format erstreckt, das dem der transparenten Sicherheitsschicht (16) ähnlich ist.

14. Vorrichtung nach einem der Ansprüche 11 bis 13, **dadurch gekennzeichnet, dass** sie einen Trägerfilm (18) umfasst, der einen transparenten Sicherheitsfilm (16) trägt, der sich entsprechend einem Format, das an das des Oberflächenabschnitts angepasst ist, erstreckt, wobei die transparente Sicherheitsschicht von dem transparenten Sicherheitsfilm (16) gebildet wird.

15. Offizielles Dokument, das mindestens eine transparente Sicherheitsschicht (16) umfasst, die mindestens einen Oberflächenabschnitt einer Aufschriften tragenden Schicht bedeckt, **dadurch gekennzeichnet, dass**:
- die transparente Sicherheitsschicht mindestens ein halbtransparentes Druckbild umfasst, das mindestens ein transparentes Bindemittel und mindestens ein thermochromes Pigment umfasst, das dazu beschaffen ist, bei einer vorbestimmten Temperaturänderung die Farbe zu wechseln,
- das halbtransparente Druckbild in einem ersten Zustand, der als nicht aktivierter Zustand bezeichnet wird, bei mindestens einer ersten Temperatur mindestens ein sichtbares halbtransparentes Motiv erscheinen lässt, das das Betrachten der Aufschriften durch dieses Bild hindurch gestattet, wobei das Motiv in einem zweiten Zustand, der als aktivierter Zustand bezeichnet wird, bei mindestens einer zweiten, von der ersten Temperatur verschieden Temperatur nicht sichtbar ist,
- das Verhältnis der thermochromen Pigmente in dem Bindemittel so ist, dass das halbtransparente Bild im nicht aktivierten Zustand der thermochromen Pigmente das Betrachten der Aufschriften durch dieses Bild hindurch gestattet.

## Claims

1. Method for the security protection of a surface portion of a layer of an official document (22) bearing inscriptions to be protected, wherein:
- a transparent security layer is applied to said surface portion so as to cover said inscriptions to be protected,
**characterised in that**:
- there is chosen a transparent security layer (16) comprising at least one semi-transparent printed image comprising at least one transparent binder and at least one thermochromic pigment adapted to change color when there is a predetermined temperature variation,
- in a first state, named the non-activated state, at at least a first temperature, said semi-transparent printed image reveals at least one semi-transparent visible motif allowing said inscriptions to be protected to be seen through the image, said motif not being visible in a second state, named the activated state, at at least a second temperature which is different from the first temperature,
- the proportion of thermochromic pigments in the binder is such that the semi-transparent image allows said inscriptions to be protected to be seen through the image when the thermochromic pigments are in the non-activated state.

2. The method according to claim 1, **characterised in that** said semi-transparent image is a colored image.

3. The method according to either claim 1 or claim 2, **characterised in that** said semi-transparent image is a polychromatic image.

4. The method according to any one of claims 1 to 3, **characterised in that** said semi-transparent image is printed by the four-color technique.

5. The method according to any one of claims 1 to 4, **characterised in that** said semi-transparent image is printed with a screen ruling greater than 80 lines per inch.

6. The method according to any one of claims 1 to 5, **characterised in that** said transparent binder is chosen from the group formed of transparent polymeric binders.

7. The method according to any one of claims 1 to 6, **characterised in that** said semi-transparent image is printed with the aid of at least one printing composition comprising at least one thermochromic pigment chosen from the group formed of capsules comprising at least one leuco dye, at least one weak acid and at least one solvent.

8. The method according to any one of claims 1 to 7, **characterised in that** said semi-transparent image is printed with the aid of at least one printing composition comprising from 9 to 22 wt.% thermochromic pigments.

9. The method according to any one of claims 1 to 8, **characterised in that** said semi-transparent image is printed by printing in succession:
- a first printing composition comprising at least one thermochromic pigment of cyan color,
- a second printing composition comprising at least one thermochromic pigment of magenta color,
- a third printing composition comprising at least one thermochromic pigment of yellow color, and
- a fourth printing composition comprising at least one thermochromic pigment of black color.

10. The method according to any one of claims 1 to 9, **characterised in that**:
- there is chosen a protection device comprising a transparent security film (16) which extends in a format adapted to that of said surface portion and is carried by a support film (18), said transparent security layer being formed of said transparent security film (16),
- and said transparent security film is applied to said surface portion so that the semi-transparent image covers the inscriptions to be protected.

11. Device for the security protection of a surface portion of a layer of an official document (22) bearing inscriptions to be protected, said device comprising a transparent security layer (16) which extends in a format adapted to that of said surface portion,
**characterised in that**:
- the transparent security layer (16) comprises at least one semi-transparent printed image comprising at least one transparent binder and at least one thermochromic pigment adapted to change color when there is a predetermined temperature variation,
- in a first state, named the non-activated state, at at least a first temperature, said semi-transparent printed image reveals at least one semi-transparent visible motif which allows the inscriptions to be protected to be seen through the image, said motif not being visible in a second state, named the activated state, at at least a second temperature which is different from the first temperature,
- the proportion of thermochromic pigments in the binder is such that the semi-transparent image allows the inscriptions to be protected to be seen through the image when the thermochromic pigments are in the non-activated state.

12. The device according to claim 11, **characterised in that** said semi-transparent image is a polychromatic image.

13. The device according to either claim 11 or claim 12, **characterised in that** said semi-transparent image extends in a format similar to that of the transparent security layer (16).

14. The device according to any one of claims 11 to 13, **characterised in that** it comprises a support film (18) carrying a transparent security film (16) which extends in a format adapted to that of said surface portion, said transparent security layer being formed of said transparent security film (16).

15. An official document comprising at least one transparent security layer (16) covering at least a surface portion of a layer bearing inscriptions, **characterised in that**:
- the transparent security layer comprises at least one semi-transparent printed image comprising at least one transparent binder and at least one thermochromic pigment adapted to change color when there is a predetermined temperature variation,
- in a first state, named the non-activated state, at at least a first temperature, said semi-transparent printed image reveals at least one semi-transparent visible motif which allows said inscriptions to be seen through the image, said motif not being visible in a second state, named the activated state, at at least a second temperature which is different from the first temperature,
- the proportion of thermochromic pigments in the binder is such that the semi-transparent image allows said inscriptions to be seen through the image when the thermochromic pigments are in the non-activated state.
